# EUROPEAN PATENT APPLICATION

(11) **EP 2 053 083 A1**
(43) Date of publication of application: **29.04.2009**
(21) Application number: 08017528.4
(22) Date of filing: 07.10.2008
(51) Int. Cl.: C08K 3/00, C08K 3/22, C08K 3/26, C09D 5/18, C09D 131/04, C09D 133/08, C09D 133/10, C09K 21/02, C09K 21/14, D06N 7/00

(54) **Fire retardant coating composition for fibrous mat**

(30) Priority: 22.10.2007 US 975757
(71) Applicant: Johns Manville, Denver CO 80202 (US)
(72) Inventor: Nandi, Malay, Littleton Colorado 80124 (US); Nandi, Souvik, Arvada Colorado 80003 (US); Zheng, Guodong, Englewood Colorado 80111 (US)
(74) Representative: Dörr, Klaus

(57) **Abstract**

A fire retardant coating composition for a fibrous mat comprises one or more fillers and one or more binders with each organic binder having a peak heat release rate of ≤1000 kW/m² as measured by ASTM E1354, flux 30 kW/m². A coated fiberglass mat comprising the coating composition has a FIGRA value of ≤120 W/s according to EN 13823, 0.4 MJ and a flame index of ≤25 and a smoke index of ≤50 according to ASTM E84.

## Description

### Field of Art

The present disclosure relates to a coating composition that is applicable to fibrous (*i*.*e*., woven or non-woven) mat, and more particularly to a fire retardant coating composition.

### Background

Coating compositions can be applied to various fibrous mats (*e*.*g*., fiberglass mats). Applications for such coated mats include, for example, sheathing - either external or internal (*e*.*g*., gypsum, stucco, concrete, wallboard, or tile backer), roofing, flooring, facers, ceiling tiles (*e*.*g*., low or high density foams, gypsum core, or concrete core), and laminated products (*e*.*g*., duct board).

However, to be considered for specific applications, often certain performance standards must be met. In particular, fire retardant standards are of significant importance. Such performance standards include the ASTM E84 ("Standard Test Method for Surface Burning Characteristics of Building Materials") and EN 13823 ("European Single Burning Item" or SBI) fire tests.

There are various patents related to coating composition applicable to glass fiber mats. For example, U.S. Patent No. 4,784,897 discloses a cover layer material on a matting or fabric basis for the manufacture of boards from liquid or liquid-containing starting components, covered bilaterally with cover layers, especially for the manufacture of gypsum boards and polyurethane (PU) hard foam boards; the matting or fabric having on one side a coating of 70 to 94 wt.-% of a powdered inorganic material and 6 to 30 wt.-%, absolutely dry weight, of a binding agent; U.S. Patent No. 4,879,173 and 5,342,680 disclose coating compositions comprising "resinous binder"; and U.S. Patent Nos. 5,112,678 and 6,77,0354 disclose coating compositions comprising "inorganic binder".

In addition, U.S. Patent Nos. 4,229,329, 4,495,238, 5,091,243, 5,965,257, and 6,858,550 disclose fire retardant coating compositions. For example, U.S. Patent No. 4,229,329 discloses a fire retardant coating composition useful as a paint or as a mastic composed of ultrafine pulverized fly ash, a low viscosity vinyl acrylic type emulsion polymer as a binder and water, with the ultrafine fly ash preferably comprising 24-50% of the composition by weight, and U.S. Patent No. 5,091,243 discloses a fire-resistant fabric suitable for use as a flame barrier comprising a flame durable textile fabric substrate formed of corespun yarns, the yarns comprising a core of flame resistant filament and a sheath of staple fibers, and an intumescent coating carried by one surface of the textile fabric substrate.

U.S. Patent No. 6,858,550 discloses a fire resistant fabric material comprising a substrate having an ionic charge which is coated with a coating having essentially the same ionic charge. The coating consists essentially of a filler material comprising clay and a binder material. The substrate is preferably fiberglass. U.S. Patent No. 6,858,550 discloses that the filler material may further comprise at least one additional filler selected from the group consisting of decabromodiphenyloxide, antimony trioxide, fly ash, charged calcium carbonate, mica, glass microspheres and ceramic microspheres and mixtures thereof and the binder material is preferably acrylic latex. U.S. Patent No. 6,858,550 further discloses that decabromodiphenyloxide and antimony trioxide impart the following nonlimiting characteristics: (1) flame retardant properties, (2) capability of forming a char, and (3) capability of stopping the spread of flames.

However, the aforementioned patents do not disclose a coating composition that passes both the ASTM E84 and EN 13823 fire tests. What is needed is a coating composition applicable to fibrous mats that passes both the ASTM E84 and EN 13823 fire tests.

### Summary

Provided is a fire retardant coating composition for a fibrous mat comprising one or more fillers and one or more binders with each organic binder having a peak heat release rate of ≤1000 kW/m² as measured by ASTM E1354, flux 30 kW/m². A coated fiberglass mat comprising the coating composition has a FIGRA value of ≤120 W/s according to EN 13823, 0.4 MJ and a flame index of ≤25 and a smoke index of ≤50 according to ASTM E84.

Such a coating composition can offer a coated fibrous mat suitable for applications requiring that certain fire performance standards (*i*.*e*., ASTM E84 and EN 13823 fire tests) be met. Since the coating composition meets both the ASTM E84 and EN 13823 fire tests, it can be used in most any applications requiring fire retardancy.

### Detailed Description

The presently disclosed fire retardant coating composition for a fibrous mat, comprises one or more fillers and one or more binders with each organic binder having a peak heat release rate of ≤1000 kW/m² as measured by ASTM E1354, flux 30 kW/m². A coated fiberglass mat comprising the coating composition has a FIGRA value of ≤120 W/s according to EN 13823, 0.4 MJ and a flame index of ≤25 and a smoke index of ≤50 according to ASTM E84. In an embodiment, the combination of all binders present in the coating composition has a peak heat release rate of ≤1000 kW/m² as measured by ASTM E1354, flux 30 kW/m². The coating composition essentially uniformly penetrates the surface of the mat and provides a unique combination of surface porosity and surface smoothness. The total solids of the coating composition can comprise, for example, approximately 85-95 weight% filler solids, approximately 5-10 weight% binder solids, and approximately 1-3 weight% additional component(s) solids (*e*.*g*., modifiers, surfactants, etc.).

Exemplary fillers suitable for use in the presently disclosed coating composition are calcium carbonate, clay, mica, aluminum trihydrate, talc, and mixtures thereof. In an embodiment, each of the fillers present in the coating composition has a peak heat release rate ≤1000 kW/m² as measured by ASTM E1354, flux 30 kW/m².

Exemplary binders suitable for use in the presently disclosed coating composition are styrene-butadiene rubber (SBR), ethylene-vinyl chloride, polyvinylidenechloride, modified polyvinylchloride, polyvinyl alcohol, ethylene vinyl acetate (EVA), polyvinyl acetate, ethylacrylate-methylmethacrylate acrylic copolymer latex, non-carboxylated acrylic with acrylonitrile copolymer latex, carboxylated butyacrylic copolymer latex, urea-formaldehyde latex, melamine-formaldehyde latex, polyvinylchloride-acrylic latex, methylmethacrylate-styrene copolymer latex, styrene-acrylic copolymer latex, phenol-formaldehyde latex, vinyl-acrylic latex, polyacrylic acid latex, and mixtures thereof. In an embodiment, the binder is aqueous. The binder may comprise, for example, core-shell latex, polymer latex, and/or inorganic binder. In an embodiment wherein the binder comprises core-shell latex, the soft core can made of, for example, butadiene and/or butyl acrylate, and the shell can made of, for example, methyl methacrylate (MMA).

The coating composition can further comprise pigment (*i*.*e*., organic or inorganic), surfactants, organic additive (*e*.*g*., rheology modifier), inorganic additives (*e*.*g*., colorants, biocides, and/or stabilizers, such as, for example, oxidative stabilizer), thickener, and/or water repellants. In an embodiment, each component (*e*.*g*., each organic component) comprising ≥0.1 weight% of the dried (*i*.*e*., applied) coating composition has a peak heat release rate of ≤1000 kW/m² as measured by ASTM E1354, flux 30 kW/m².

The presently disclosed coating composition is applicable to fiberglass mat, which can be defined as a substrate comprising at least partially of non-woven glass fibers (*e*.*g*., <30 microns average diameter and >2 mm average length). Remaining content, if any, could be organic or inorganic fiber (such as, for example, poly propylene, poly(ethylene terephthalate), basalt, or wollastanite fiber) and/or resin (*i*.*e*., organic and/or inorganic). The presently disclosed coating composition is also applicable to mats comprised of bleached cellulosic fibers and/or fibers derived from a cellulosic material, continuous filament mat, and/or synthetic fiber (*i*.*e*., continuous or discontinuous) mat. Examples of synthetic fibers include, for example, nylon, polyester, and polyethylene. The presently disclosed coating composition could be applied by any established method, and the application could comprise one pass or multiple passes.

The following illustrative examples are intended to be non-limiting.

### Examples

Tables 1a and 1b, below, provides characteristics of a coating composition comprising SBR latex (*i*.*e*., Goodrite 0706), applicable to fibrous mat. In particular, Table 1a describes the solids components of the coating composition, which when combined with water form the coating composition, as provided in Table 1 b.

**Table 1a**

| | | Solids Weight% | Weight% Solids of Total Solids | Weight% Solids in Coating Composition |
|---|---|---|---|---|
| Rheolate 278 | Thickener | 25.0 | 0.2550 | 0.1862 |
| Triton CF10 | Dispersant | 50.0 | 0.1500 | 0.1095 |
| BYK-037 | Defoamer | 51.0 | 0.0250 | 0.0183 |
| Sequapel | Water repellant | 40.0 | 0.5000 | 0.3650 |
| Goodrite 0706 | Latex | 51.9 | 6.0000 | 4.3800 |
| MartinalON-310 / 10 White | A1(OH)₃ / CaCO₃ | 100.0 | 93.0700 | 67.9400 |

**Table 1b**

| | Density (g/l) | Weight in Coating Composition (g) | Weight% of Coating Composition | Volume in Coating Composition (ml) |
|---|---|---|---|---|
| Water | 1000.0 | 142.71 | 21.7077 | 142.7142 |
| Rheolate 278 | 999.5 | 4.90 | 0.7446 | 4.8980 |
| Triton CF10 | 1096.2 | 1.44 | 0.2190 | 1.3134 |
| BYK-037 | 937.9 | 0.24 | 0.0358 | 0.2508 |
| Sequapel | 995.5 | 6.00 | 0.9125 | 6.0265 |
| Goodrite 0706 | 1040.0 | 55.48 | 8.4393 | 53.3490 |
| MartinalON-310/10 White | 2730.9 | 446.67 | 67.9411 | 163.5611 |

Table 2, below, provides coat characteristics of and test results for the coating composition of Tables 1a and 1b, comprising SBR, applied to Glass Mat 8229 (comprised of fiberglass and polyester fiber), manufactured by Johns Manville, Denver, Colorado.

**Table 2**

| Latex Type | Coat weight (gsm) | Air Permeability (CFM) | ASTM E84 | | EN 13823 | |
|---|---|---|---|---|---|---|
| | | | Flame Index (Pass: ≤25) | Smoke Index (Pass: ≤50) | FIGRA (0.4 MJ) (W/s) (Pass: ≤120) | Total Heat Release (600s, MJ) |
| Goodrite 0706 | 172 | 45 | 20 | 31 | 175 | 0.82 |

With regard to the ASTM E84 and EN 13823 fire tests disclosed herein, testing was performed with the coated side of the fiberglass mat exposed to flame. While fiberglass mat coated with the coating composition comprising SBR latex passed the ASTM E84 fire tests (*i*.*e*., had a flame index of ≤25 and a smoke index of ≤50 according to ASTM E84), fiberglass mat coated with the coating composition comprising SBR latex had a FIGRA (Fire Growth Rate Index) value of 175 W/s in the EN 13823 fire test, 0.4 MJ, exceeding the "passing" FIGRA value of ≤120 W/s in the EN 13823 fire test, 0.4 MJ, which corresponds to an S2 classification. In the EN 13823 test, "Peak Heat Release Rate" is important, as is total heat release.

Tables 3a and 3b, below, provide characteristics of a coating composition comprising acrylic latex (*i*.*e*., HyStretch V29), applicable to fibrous mat. In particular, Table 3a describes the solids components of the coating composition, which when combined with water form the coating composition, as provided in Table 3b.

**Table 3a**

| | | Solids Weight% | Weight% Solids of Total Solids | Weight% Solids in Coating Composition |
|---|---|---|---|---|
| Natrosol HHR | Thickener | 1.0 | 0.40 | 0.2734 |
| Alcosperse AD | Dispersant | 45.0 | 0.13 | 0.0916 |
| Invadin PBN | Surfactant | 100.0 | 0.10 | 0.0684 |
| Repellan KFC | Water repellant | 100.0 | 0.30 | 0.2051 |
| HyStretch V29 | Latex | 49.0 | 5.00 | 3.4180 |
| Martinal 310 / 10 white / Marble dust | A1(OH)₃ / CaCO₃ | 100.0 | 94.07 | 64.3000 |

**Table 3b**

| | Density (g/l) | Weight in Coating Composition (g) | Weight% of Coating Composition | Volume in Coating Composition (ml) |
|---|---|---|---|---|
| Water | 1000.0 | 5.37 | 0.9000 | 5.3685 |
| Natrosol HHR | 1000.0 | 163.11 | 27.3440 | 163.1134 |
| Alcosperse AD | 1300.0 | 12.1 | 0.2036 | 0.9341 |
| Invadin PBN | 1000.0 | 0.41 | 0.0684 | 0.4078 |
| Repellan KFC | 1100.0 | 1.22 | 0.2051 | 1.1121 |
| HyStretch V29 | 1040.0 | 41.61 | 6.9755 | 40.0101 |
| Martinal 310 / 10 white / Marble dust | 2400.0 | 383.59 | 64.3035 | 159.8273 |

Tables 4a and 4b, below, provide characteristics of a coating composition comprising EVA latex (*i*.*e*., Air Flex EF811), applicable to fibrous mat. In particular, Table 4a describes the solids components of the coating composition, which when combined with water form the coating composition, as provided in Table 4b.

**Table 4a**

| | | Solids Weight % | Weight% Solids of Total Solids | Weight% Solids in Coating Composition |
|---|---|---|---|---|
| Natrosol HHR | Thickener | 1.0 | 0.40 | 0.2600 |
| Alcosperse AD | Dispersant | 45.0 | 0.10 | 0.0650 |
| Invadin PBN | Surfactant | 100.0 | 0.10 | 0.0650 |
| Repellan KFC | Water repellant | 100.0 | 0.30 | 0.1950 |
| Air Flex EF811 | Latex | 62.0 | 5.00 | 3.2500 |
| Martinal 310 | A1(OH)₃ | 100.0 | 94.10 | 61.1700 |

**Table 4b**

| | Density (g/l) | Weight in Coating Composition (g) | Weight% of Coating Composition | Volume in Coating Composition (ml) |
|---|---|---|---|---|
| Water | 1000.0 | 56.31 | 7.1886 | 56.3058 |
| Natrosol HHR | 1000.0 | 203.65 | 26.0000 | 203.6504 |
| Alcosperse AD | 1300.0 | 1.13 | 0.1444 | 0.8703 |
| Invadin PBN | 1000.0 | 0.51 | 0.0650 | 0.5091 |
| Repellan KFC | 1100.0 | 1.53 | 0.1950 | 1.3885 |
| Air Flex EF811 | 1100.0 | 41.06 | 5.2419 | 37.3260 |
| Martinal 310 | 2400.0 | 479.09 | 61.1650 | 199.6198 |

Table 5, below, provides coat characteristics of and test results for the coating composition of Tables 1 a and 1 b ("SBR"), Tables 3a and 3b ("Acrylic"), and Tables 4a and 4b ("EVA"), applied to Glass Mat 8229, manufactured by Johns Manville, Denver, Colorado.

**Table 5**

| Latex Type | Coat Weight (gsm) | Air Permeability (CFM) | Peak Heat Release Rate (ASTM E1354, flux 30 kW/m²) (kW/m²) | FIGRA (EN 13823, 0.4 MJ) (W/s) (Pass: ≤ 120) | Total Heat Release (EN 13823, 600s) (MJ) |
|---|---|---|---|---|---|
| SBR | 138 | 19 | 1600 | 233 | 0.95 |
| Acrylic | 155 | 45 | 585 | 98 | 0.86 |
| EVA | 220 | 50 | 497 | 68 | 0.8 |
| EVA | 220 | 20 | 497 | 103 | 0.75 |

The peak heat release rate of the latex has significant impact in the EN 13823 full scale fire test. As shown in Table 5, a change of latex type from SBR to either acrylic or EVA provided a FIGRA value of ≤120 W/s in the EN 13823 fire test, 0.4 MJ. Comparing latex type SBR in Table 5 with latex types Acrylic and EVA in Table 5, it is observed that the coated mats (*i*.*e*., coated fiberglass mats) whose coating included latexes/other organic components with lower peak heat release rates (*i*.*e*., Acrylic and EVA) performed better in EN 13823 fire tests compare to the coated mats (*i*.*e*., coated fiberglass mats) whose coating included latexes/other organic components with higher peak heat release rates (*i*.*e*., SBR).

As noted from Tables 1 a and 1b, Tables 3a and 3b, and Tables 4a and 4b, the coating compositions of Table 5 were the same except for the difference in latex type, and that Rheolate 278 (high Peak Heat Release Rate organic component) was used as thickener with SBR, while Natrosol HHR (low Peak Heat Release Rate organic component) was used as thickener with Acrylic and EVA. Changing thickener used with EVA from Natrosol HHR to Rheolate 278 increased the FIGRA value by about 43 W/s (coat weight 145 Grams per Square Meter (gsm) and air permeability 35 Cubic Feet Per Minute (CFM)).

While the binder of the presently disclosed coating composition has a peak heat release rate of ≤1000 kW/m² as measured by ASTM E1354, flux 30 kW/m², in embodiments illustrated in Table 5, the binder (*e*.*g*., organic binder) has a peak heat release rate of ≤600 kW/m² as measured by ASTM E1354, flux 30 kW/m², or a peak heat release rate of ≤500 kW/m² as measured by ASTM E1354, flux 30 kW/m². Further, in embodiments, the filler and/or all components (*e*.*g*., organic components) comprising ≥0.1 weight% of the dried coating composition (*i*.*e*., Weight% Solids of Total Solids) each have a peak heat release rate of ≤600 kW/m² or ≤500 kW/m² as measured by ASTM E1354, flux 30 kW/m².

Both of the coated fiberglass mats of Table 5 whose coatings included EVA had a coat weight of 220 gsm. However, the coated fiberglass mat (whose coating included EVA) which had an air permeability of 20 CFM had a FIGRA value of 103 W/s in the EN 13823 fire test, 0.4 MJ, while the coated fiberglass mat (whose coating included EVA) which had an air permeability of 50 CFM had a FIGRA value of 68 W/s in the EN 13823 fire test, 0.4 MJ. It is observed that air permeability, at a given coat weight, dictates the EN 13823 fire testing performance; the coated mat (*e*.*g*., coated fiberglass mat) with higher air permeability appears to perform better in EN 13823 fire tests. Consequently, a coated fibrous mat (*e*.*g*., coated fiberglass mat) having a nominal (*i*.*e*., certain or given) air permeability has a lower FIGRA value according to EN 13823, 0.4 MJ, as compared to another equivalent coated fibrous mat (*i*.*e*., a fibrous mat comprised of the same fibrous material and coated with the same coating composition at the same coat weight) having an air permeability lower than the nominal air permeability of the coated fibrous mat. In embodiments, the coated fibrous mats can have an air permeability of ≥10 CFM, for example, ≥20 CFM, ≥45 CFM, or ≥50 CFM.

The presently disclosed coating composition may include additional constituents not specified. However, in an embodiment, additional constituents do not cause a material change in the basic and novel characteristics of the composition, which include fire retardancy without the inclusion of one or more organic fire retardants, such as, for example, decabromodiphenyloxide.

While various embodiments have been described, it is to be understood that variations and modifications can be resorted to as will be apparent to those skilled in the art. Such variations and modifications are to be considered within the purview and scope of the claims appended hereto.

## Claims

1. A fire retardant coating composition for a fibrous mat comprising:
one or more fillers; and
one or more binders with each organic binder having a peak heat release rate of ≤1000 kW/m² as measured by ASTM E1354, flux 30 kW/m²;
wherein a coated fiberglass mat comprising the coating composition has: a FIGRA value of ≤120 W/s according to EN 13823, 0.4 MJ; and a flame index of ≤25 and a smoke index of ≤50 according to ASTM E84.

2. The coating composition of claim 1, further comprising one or more components selected from the group consisting of pigments, surfactants, rheology modifiers, stabilizers, colorants, biocides, thickeners, water repellants, and mixtures thereof.

3. The coating composition of claim 1, wherein the one or more fillers are selected from the group consisting of calcium carbonate, mica, clay, aluminum trihydrate, talc, and mixtures thereof.

4. The coating composition of claim 1, wherein each organic binder has a peak heat release rate of ≤600 kW/m² as measured by ASTM E1354, flux 30 kW/m².

5. The coating composition of claim 1, wherein each filler has a peak heat release rate of ≤1000 kW/m² as measured by ASTM E1354, flux 30 kW/m².

6. The coating composition of claim 1, wherein each organic component comprising at least 0.1 weight% of dried coating composition has a peak heat release rate of ≤1000 kW/m² as measured by ASTM E1354, flux 30 kW/m².

7. The coating composition of claim 1, wherein each component comprising at least 0.1 weight% of dried coating composition has a peak heat release rate of ≤1000 kW/m² as measured by ASTM E1354, flux 30 kW/m².

8. The coating composition of claim 1, wherein all components comprising at least 0.1 weight% of dried coating composition have a peak heat release rate of ≤600 kW/m² as measured by ASTM E1354, flux 30 kW/m².

9. The coating composition of claim 1, wherein the one or more binders are selected from the group consisting of styrene-butadiene rubber, ethylene-vinyl chloride, polyvinylidenechloride, modified polyvinylchloride, polyvinyl alcohol, ethylene vinyl acetate, polyvinyl acetate, ethylacrylate-methylmethacrylate acrylic copolymer latex, non-carboxylated acrylic with acrylonitrile copolymer latex, carboxylated butyacrylic copolymer latex, urea-formaldehyde latex, melamine-formaldehyde latex, polyvinylchloride-acrylic latex, methylmethacrylate-styrene copolymer latex, styrene-acrylic copolymer latex, phenol-formaldehyde latex, vinyl-acrylic latex, polyacrylic acid latex, and mixtures thereof.

10. The coating composition of claim 1, wherein the one or more binders comprise core-shell latex.

11. The coating composition of claim 10, wherein the core-shell latex comprises a soft core comprising butadiene and/or butyl acrylate and a shell comprising methyl methacrylate.

12. The coating composition of claim 1, wherein the one or more binders comprise inorganic binder.

13. The coating composition of claim 1, wherein the one or more binders comprise one or more aqueous binders.

14. The coating composition of claim 1, wherein the coating composition does not comprise an organic fire retardant.

15. A coated fibrous mat comprising a fiberglass mat coated with the coating composition of claim 1.

16. The coated fibrous mat of claim 15, wherein the coated fibrous mat has an air permeability of ≥10 CFM.

17. The coated fibrous mat of claim 16, wherein the coated fibrous mat has:
a nominal air permeability at a given coat weight; and
a lower FIGRA value according to EN 13823, 0.4 MJ, as compared to a coated fiberglass mat comprising an identical coating composition at an identical coat weight and having an air permeability lower than the nominal air permeability.

18. The coated fibrous mat of claim 17, wherein the nominal air permeability is ≥20 CFM.

19. The coated fibrous mat of claim 17, wherein the nominal air permeability is ≥45 CFM.

20. The coated fibrous mat of claim 17, wherein the nominal air permeability is ≥50 CFM.
